# EUROPÄISCHE PATENTSCHRIFT

(11) **EP 1 442 852 B1**
(45) Veröffentlichungstag und Bekanntmachung des Hinweises auf die Patenterteilung: **04.10.2006**
(21) Anmeldenummer: 03000855.1
(22) Anmeldetag: 15.01.2003
(51) Int. Cl.: B27G 13/04, B23C 5/20

(54) **Walzenfräser mit Wendeschneidplatten, insbesondere zur Holzbearbeitung**
Milling cutter with indexable inserts, in particular for woodworking
Tête de fraisage avec plaquettes indexables, en particulier pour le travail du bois

(43) Veröffentlichungstag der Anmeldung: 04.08.2004
(73) Patentinhaber: Utensilea SAS, 31057 S. Elena di Silea (Treviso) (IT)
(72) Erfinder: De Marco, Domenico, 31057 S. Elena di Silea Treviso (IT)
(74) Vertreter: Gallo, Wolfgang

(56) Entgegenhaltungen:
- EP-A- 0 827 818
- EP-A- 1 072 347
- EP-A- 1 193 037
- FR-A- 2 702 403
- US-A- 1 432 580
- US-A- 4 541 756
- US-A- 6 116 305

## Beschreibung

Walzenfräser zur Bearbeitung von Holz, Kunststoffen oder Metallen sind bekannt. Sie haben eine Mehrzahl von am Umfang mit gegenseitigen Umfangsabständen verlaufende Schneiden, die in Form einer steilen Wendel verlaufen. Für die Holzbearbeitung sind solche Schaftfräser bekannt, die eine axiale Durchgangsbohrung zur Montage auf einer Trägerwelle haben. Eine bekannte Sonderform von Walzenfräsern für die Holzbearbeitung bilden auch die Hobelwellen, die üblicherweise gerade axial verlaufende Schneiden haben.

Andererseits sind Messerköpfe bekannt, die aus einem Trägerkörper bestehen, an welchem am Umfang und/oder stirnseitig Messerplatten austauschbar eingespannt werden können. Solche Messerplatten werden häufig als Wendeschneidplatten ausgeführt, die mindestens zwei Schneiden haben, so daß die Messerplatten nach entsprechendem Verschleiß der Schneiden umgedreht und mit einer zweiten Schneide nochmals verwendet werden können.

Ein Walzenfräser mit den Merkmalen des Oberbegriffs des Anspruchs 1 ist aus dem Dokument FR-A-2 702 403 bekannt. Dieser weist mehrere, nämlich mindestens zwei an seinem Umfang mit gleichmäßigen Umfangsabständen angeordnete, jeweils in Gestalt einer steilen Wendel verlaufende Reihen von Wendeschneidplatten auf, die an einem als Trägerkörper dienenden Walzenkörper montier sind, wobei die Wendeschneidplatten der in Umfangsrichtung aufeinanderfolgenden Wendeschneidplattenreihen derart axial zueinander versetzt angeordnet sind, daß sie "auf Lücke" stehen, d. h. daß eine Wendeschneidplatte einer in Drehrichtung nachfolgenden Reihe immer eine Lücke zwischen zwei axial benachbarten Wendeschneidplatten der in Drehrichtung vorauslaufenden Reihe überdeckt. Die Schneidplatten sind quadratische Schneidplatten mit vier gleichen, an den vier Seiten angeordneten Schneiden.

Aufgabe der Erfindung ist es, einen solchen Walzenfräser derart weiterzubilden, daß längere Walzenfräseranordnungen nach Bedarf herstellbar sind.

Diese Aufgabe wird gemäß der Erfindung durch die Anordnung nach Anspruch 1 gelöst.

Gemäß der Erfindung ist der Walzenfräser aus mehreren, nämlich mindestens zwei lösbar miteinander verbundenen axialen Segmenten gleicher oder unterschiedlicher Länge mit variabler axialer Gesamtlänge aufbaubar. Dazu sind die einzelnen Walzenfräsersegmente jeweils mit einer axialen Durchgangsbohrung ausgestattet, mit welcher sie auf eine Welle aufsetzbar sind, und die einzelnen Walzenfräser sind an mindestens einem oder jedem Stimende mit einem solchen Formschlussprofil ausgestattet, daß, wenn dieses stirnseitige Formschlussprofil eines Segments in das komplementäre stimseitige Formschlussprofil eines weiteren Segments eingreift, die jeweils schraubenlinienförmigen Wendeschneidplattenreihen der axial benachbarten Walzenfräsersegmente fließend ineinander übergehen. Zweckmäßigerweise hat also jedes Walzenfräsersegment, unabhängig von seiner axialen Länge, am jeweils einen Stimende ein "positives" und am anderen Stimende ein "negatives" Formschlussprofil, die zueinander komplementär sind und natürlich entsprechend dem von den Schraubenlinienförmigen Wechselschneidplattenreihen umspannten Winkel zueinander winkelversetzt verlaufen. Es können axiale Walzenfräsersegmente mit mehreren abgestuften Längen vorgesehen sein, so daß baukastenmäßig bestimmte unterschiedliche Fräser- bzw. Hobelwellenlängen zusammengesetzt werden können, je nach Bedarf für den jeweiligen Einzelfall.

Die Fräserwalzenkörper können aus Aluminium oder Stahl gefertigt werden.

Aus dem Dokument EP-A-1 072 347 ist es an sich bekannt, einen langen Walzenfräser mit Wendeschneidplattenreihen nach Art des aus der FR-A-2 702 403 bekannten Walzenfräsers aus einem Grundkörper aufzubauen, an dessen Umfang axiale Leisten montiert sind, die als Führungen zum Aufschieben von axialen Mantelsegmenten dienen, die jeweils radial einwärts vorspringende axiale Rippen aufweisen, und an deren Umfang die Wendeschneidplatten montiert sind.

Das Walzenfräser anderer Bauart aus axial aneinanderstoßenden Segmenten aufbaubar sind, ist aus der US-A-4 541 756 oder der EP-A-1 193 037 an sich bekannt. Dort sind allerdings keine sich über die axialen Segmente fortsetzenden Schneidenreihen vorgesehen.

Ein Ausführungsbeispiel der Erfindung ist in den anliegenden Zeichnungen dargestellt und wird im folgenden näher beschrieben. In den Zeichnungen zeigt:
- Fig. 1: eine Seitenansicht eines aus axialen Segmenten zusammengesetzten Walzenfräsers nach der Erfindung,
- Fig. 2: eine einzelne Wendeschneidplatte des Walzenfräsers in vergrößerter Seitenansicht, und
- Fig. 3: eine einzelne Wendeschneidplatte des Walzenfräsers in vergrößerter Draufsicht.

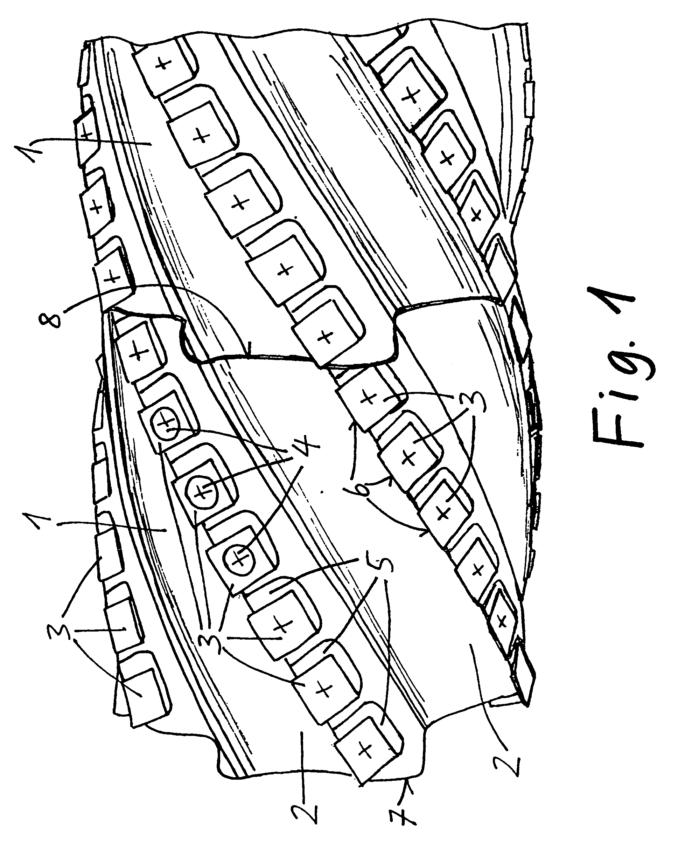

Figur 1 zeigt in Seitenansicht einen in Walzenfräser nach der Erfindung, der aus zwei axial miteinander gekuppelten Walzenfräsersegmenten zusammengesetzt ist.

Jedes Walzenfräsersegment besteht aus einem als Trägerkörper für die Wendeschneidplatten dienenden Walzenkörper 1 mit eingeformten Spannuten 2, und aus in Gestalt einer steilen Schraubenwendel verlaufenden Reihen von jeweils quadratischen Wendeschneidplatten 3, die jeweils mittels einer Schraube 4 in einer entsprechenden Aussparung 5 des Walzenkörpers montiert sind. In Figur 1 sind aus Vereinfachungsgründen nur bei drei der Wendeschneidplatten die Schraubenköpfe der Schrauben 4 eingezeichnet, aber es versteht sich, daß jede Wendeschneidplatte mit einer solchen Schraube am Walzenkörper 1 befestigt ist. Jede der Wendeschneidplatten hat an jeder ihrer vier Seiten jeweils eine Schneide, insgesamt also vier Schneiden 6, so daß diese bis zur vollständigen Abnutzung jeweils viermal in entsprechend gedrehter Aufspannung verwendet werden können.

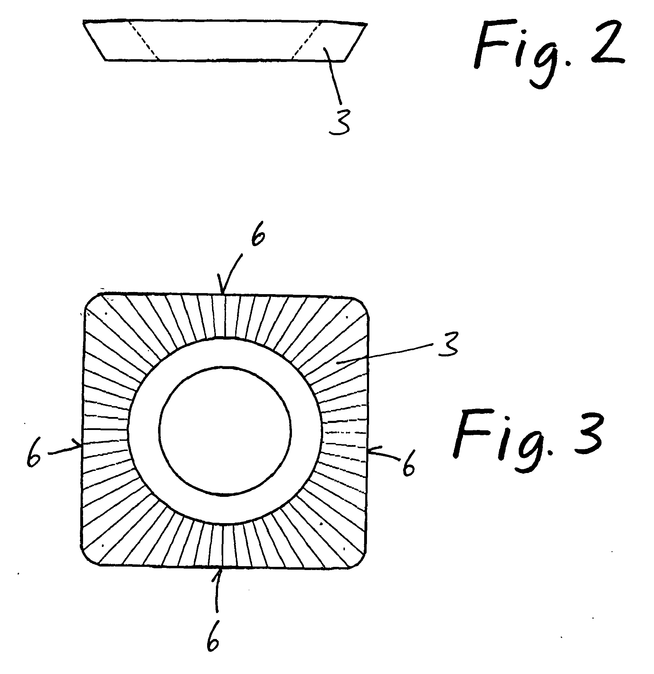

Die Figuren 2 und 3 zeigen in Seitenansicht bzw. in Draufsicht jeweils etwa fünffach vergrößert eine einzelne Wendeschneidplatte 3. In der Seitenansicht nach Figur 2 sieht man gestrichelt eingezeichnet die mittige konische Bohrung zur Aufnahme des entsprechend konischen Schraubenkopfs, der beim Aufspannen der Wendeschneidplatte Zentrierfunktion ausübt. Die Orientierungsmäßige Festlegung und Verdrehsicherung jeder Wendeschneidplatte 3 erfolgt, wie aus Figur 1 ersichtlich ist, jeweils durch das Zusammenwirken einer Kantenfläche der Wendeschneidplatte 3 mit einer (nämlich der in der Zeichnung jeweils linken) Randfläche der zugehörigen Aussparung 5.

Die Draufsicht nach Figur 3 auf die quadratische Wendeschneidplatte 3 zeigt die vier gleichen, am Umfang befindlichen Schneiden 6, weiter der gerundete Übergang an den Ecken zwischen benachbarten Schneiden zur Vermeidung von Kratzern auf dem bearbeiteten Werkstück, und Figur 3 zeigt auch in Gestalt der dünnen strahlenförmigen Linien die allseitige, allerdings geringfügige Wölbung der Oberfläche der Wendeschneidplatte, die wegen des geringen Ausmaßes der Wölbung in der Seitenansicht nach Figur 2 nur schwach erkennbar ist. Das Ausmaß der Wölbung hängt selbstverständlich von der Größe, insbesondere dem Durchmesser, des Walzenfräsers ab. Diese Wölbung bewirkt, daß die bearbeitete Oberfläche sauber und frei von Linienspuren ist.

Die Walzenkörper 1 sind, was in der Zeichnung nicht sichtbar ist, jeweils mit einer mittigen Axialbohrung zum Aufstecken auf eine Welle versehen, wie an sich bekannt ist.

Wie man weiter aus Figur 1 sieht, hat jeder Walzenkörper 1 an seiner in der Zeichnung linken Stirnseite eine "positives" Formschlussprofil 7 und an seiner in der Zeichnung rechten Stirnseite ein dazu komplementäres "negatives" Formschlussprofil 8, die, wie die Zeichnung zeigt, beim axialen Zusammenstecken der Walzenfräsersegmente diese Drehwinkelmäßig so relativ zueinander positionieren, daß die schraubenlinienförmigen Wendeschneidplattenreihen fließend ineinander übergehen. Eine Anordnung mehrerer gekuppelter Walzenfräsersegmente nach der Erfindung hat damit kontinuierlich durchlaufende schraubenlinienförmige Reihen von Wendeschneidplatten 3.

Es versteht sich, daß, wie aus Figur 1 der Zeichnungen auch ersichtlich ist, die Wendeschneidplatten 3 von in Drehrichtung aufeinanderfolgenden Reihen von Wendeschneiplatten "auf Lücke" einander überdeckend angeordnet sind, so daß die zu bearbeitende Fläche gleichmäßig spanabhebend bearbeitet wird.

## Patentansprüche

1. Walzenfräser, insbesondere zur Holzbearbeitung, mit einem Walzenkörper (1), an dessen Umfang mindestens zwei mit gleichen Umfangsbständen angeordnete axiale Reihen von Wendeschneidplatten (3) angeordnet sind, die jeweils in Gestalt einer steilen Schraubenwendel verlaufen, wobei die einzelnen Wendeschneidplatten (3) der in Umfangsrichtung aufeinanderfolgenden Wendeschneiplattenreihen axial auf Lücke positioniert und so bemessen sind, daß sich die auf Lücke stehenden einzelnen Wendeschneidplatten der axial aufeinanderfolgenden Wendeschneidblattreihen axial mit ihren wirksamen Schneiden (6) überdecken, und mit im Walzenkörper (1) jeweils eingeformten, den Wendeschneidplattenreihen zugeordneten Spannuten (2),
**dadurch gekennzeichnet, daß** der Walzenfräser aus lösbar miteinander verbundenen axialen Segmenten gleicher oder unterschiedlicher Länge mit variabler axialer Gesamtlänge aufbaubar ist, und daß die einzelnen axialen Segmente an ihren Stimenden komplementäre Formschlussprofile (7, 8) aufweisen, die eine drehwinkelmäßige relative Positionierung der aneinandergrenzenden axialen Segmente derart formschlüssig festlegen, daß die Wendeschneidplattenreihen der aneinandergrenzenden axialen Segmente fließend ineinander übergehen.

2. Walzenfräser nach Anspruch 1, wobei die Wendeschneidplatten (3) jeweils quadratische Form mit vier an ihrem Umfang gebildeten, wahlweise zu verwendenden Einzelschneiden (6) aufweisen.

3. Walzenfräser nach einem der Ansprüche 1 und 2, wobei die Wendeschneidplatten gerundete Ecken haben.

4. Walzenfräser nach einem der Ansprüche 1 bis 3, wobei die Wendeschneidplatten (3) jeweils eine schwach gewölbte Oberseite haben.

5. Walzenfräser nach einem der Ansprüche 1 bis 4, wobei die Wendeschneidplatten (3) jeweils eine mittige konische Bohrung zur Aufnahme eines konischen zentrierenden Schraubenkopfs einer Aufspannschraube haben und mit einer Kantenfläche oder ungenutzten Schneidenfläche mit einer Positionierfläche oder Positionierkante einer ihnen zugeordneten Aussparung (5) des Walzenkörpers (1) zusammenwirken.

## Claims

1. Cylindrical cutter, suitable for milling, with a roller (1), along whose circumference at least two axial sets of disposable indexable inserts (3) are placed, at an equal distance from this circumference, that form a retaining spiral in which each individual insert (3) of the aforementioned sets of inserts running along the circumference, is axially positioned on the slits and sized so that the individual inserts on the slits of the sets of inserts that run axially, axially overlap at the level of the threading (6) and grooves (2) provided in the rollers (1) for the sets of inserts,
**characterized in that** said cylindrical cutter consists of inter-connected moving axial segments, of the same or differing length, with a varying overall axial length and **in that** the individual axial segments have complementary geometric fit profiles (7, 8) on the front ends that allow geometric fitting of the adjoining axial segments according to the angle of rotation so that the sets of inserts of the adjoining axial segments engage smoothly.

2. Cylindrical cutter as in claim 1 in which the disposable indexable inserts (3) are square-shaped with four threadings (6) placed along the edge, the use of which is interchangeable.

3. Cylindrical cutter as in claim 1 and 2 in which the disposable indexable inserts have rounded corners.

4. Cylindrical cutter as in claims 1-3 in which the disposable indexable inserts (3) have a slightly arched top side.

5. Cylindrical cutter as in claims 1-3 in which the disposable indexable inserts (3) have a central conical hole for housing the conical centring head of a lock screw and interact with an edge or one of the unused threadings with a surface or an edge for positioning the cavities (5) of the corresponding roller (1).

## Revendications

1. Fraise cylindrique, adaptée au façonnage du bois, avec un corps de roulement (1), dont le long de la circonférence sont disposées, à équidistance cette même fraise, au moins deux séries axiales de plaquettes rabattables jetables (3) qui, glissant, forment une spirale de fixation où chaque plaquette (3) de ces séries, qui se suivent le long de la circonférence, est positionnée axialement sur des fissures et est de dimensions telles que chacune d'elles, disposée sur les fissures des séries de plaquettes qui se suivent axialement, se superpose axialement au niveau du filetage (6) et des rainures (2) disposées dans les corps de roulement (1) pour les séries de plaquettes,
**caractérisée par le fait que** cette fraise cylindrique est formée de segments axiaux mobiles, connectés entre eux, de longueur égale ou différente, avec une longueur axiale totale variable, et **par le fait que** chaque segment axial présente sur ses extrémités frontales des profils complémentaires à accouplement géométrique (7, 8) qui permettent donc un positionnement à accouplement géométrique des segments axiaux adjacents selon l'angle de rotation, de manière à ce que les séries de plaquettes des segments axiaux adjacents s'engrènent de manière fluide.

2. Fraise cylindrique comme selon la revendication 1 où les plaquettes rabattables jetables (3) sont de forme carrée avec quatre filetages (6) placés le long du périmètre dont l'utilisation, à votre choix, est interchangeable.

3. Fraise cylindrique comme selon les revendications 1 et 2 où les plaquettes rabattables jetables ont les angles arrondis.

4. Fraise cylindrique comme selon les revendications 1-3 où les plaquettes rabattables jetables (3) ont le côté supérieur légèrement voûté.

5. Fraise cylindrique comme selon les revendications 1-4 où les plaquettes rabattables jetables (3) ont un trou conique central pour loger une tête conique de centrage d'une vis de serrage et interagissent avec un bord ou l'un des filetages inutilisés et avec une surface ou un bord de positionnement des cavités (5) du corps de roulement (1) correspondant.
